# EUROPEAN PATENT APPLICATION

(11) **EP 4 831 822 A1**
(43) Date of publication of application: **28.10.2026**
(21) Application number: 24916645.5
(22) Date of filing: 10.12.2024
(51) Int. Cl.: G06F 15/163, G06F 15/167

(54) **METHOD FOR ACCESSING MEMORY, AND DEVICE**

(30) Priority: 10.01.2024 CN 202410042162
(71) Applicant: Huawei Technologies Co., Ltd., Shenzhen, Guangdong 518129 (CN)
(72) Inventor: QIAO, Yichuan, Shenzhen, Guangdong 518129 (CN); TIAN, Yige, Shenzhen, Guangdong 518129 (CN); FANG, Shuailei, Shenzhen, Guangdong 518129 (CN)
(74) Representative: Thun, Clemens
(86) International application number: PCT/CN2024/138201
(87) International publication number: WO 2025/148598

(57) **Abstract**

This application discloses a memory access method and a device, and relates to the field of terminal technologies, to resolve a problem that a terminal device with a multi-processor architecture cannot implement scientific and orderly memory access. In this application, a plurality of processors of the terminal device share a same memory, ensuring that, in any usage scenario, any processor can normally perform data storage, modification or reading of stored data, and the like. In addition, any processor in the plurality of processors may implement mutually exclusive access to the memory based on an obtained status indicating whether another processor is accessing the memory, thereby enabling more scientific and orderly memory sharing. The solution in which the plurality of processors of the terminal device share the same memory can further reduce production costs of the terminal device, and support miniaturization of the terminal device.

## Description

This application claims priority to Chinese Patent Application No. 202410042162.5, filed with the China National Intellectual Property Administration on January 10, 2024 and entitled "MEMORY ACCESS METHOD AND DEVICE", which is incorporated herein by reference in its entirety.

### TECHNICAL FIELD

This application relates to the field of terminal technologies, and in particular, to a memory access method and a device.

### BACKGROUND

Currently, due to considerations such as service functionality and battery life, some terminal devices use a multi-processor architecture. For example, some terminal devices include two processors, such as a main processor and a coprocessor. For terminal devices with a multi-processor architecture, how a plurality of processors access a memory is an issue that needs to be addressed.

### SUMMARY

This application provides a memory access method and a device, to resolve a problem that a terminal device with a multi-processor architecture cannot implement scientific and orderly memory access.

To achieve the foregoing objective, this application uses the following technical solutions.

According to a first aspect, a memory access method is provided. The method is applied to a first processor in a terminal device. In addition to the first processor, the terminal device further includes a second processor and a memory. The first processor and the second processor share the memory. The method includes: The first processor receives a service request that is of an application and that is used to request access to the memory; the first processor obtains, from the second processor, first information indicating whether the second processor is accessing the memory; and when the first information indicates that the second processor is not accessing the memory, the first processor accesses the memory in response to the service request.

According to the solution provided in the first aspect, a plurality of processors (for example, the first processor and the second processor) of the terminal device share a same memory, so that it can be ensured that in any application scenario, any processor can normally perform data storage, modification or reading of stored data, and the like. In addition, any processor (for example, the first processor) in the plurality of processors may implement mutually exclusive access to the memory based on an obtained access status of another processor (for example, the second processor) with respect to the memory, for example, whether the another processor is accessing the memory, thereby enabling more scientific and orderly memory sharing. The solution in which the plurality of processors (for example, the first processor and the second processor) of the terminal device share the same memory can further reduce production costs of the terminal device, and support miniaturization of the terminal device.

In an example, the first information may indicate, in a plaintext form like a direction indication, whether the second processor is accessing the memory. Alternatively, the first information may indicate, in an implicit form like a parameter indication or a preset action (for example, no reply) indication, whether the second processor is accessing the memory. This is not limited in this application.

In an example, the first processor may directly obtain, from the second processor, information indicating whether the second processor is accessing the memory. However, a specific manner and process of obtaining, by the first processor, the information indicating whether the second processor is accessing the memory are not limited in this application. For example, in some examples, the first processor may also obtain, from a third party like a status storage unit, the information indicating whether the second processor is accessing the memory.

In an example, the first processor is an application processor (application processor, AP), and the second processor is a microprogrammed control unit (microprogrammed control unit, MCU); or the first processor is an MCU, and the second processor is an AP; and the memory is an embedded multimedia card (embedded multimedia card, eMMC). Certainly, the first processor or the second processor may alternatively be an apparatus, a module, or a chip of another structure or function. This is not limited in this application.

In a possible implementation, the first processor includes a first pin, the second processor includes a second pin, and the first pin is connected to the second pin. That the first processor obtains the first information from the second processor includes: The first processor obtains a status of the first pin, where the status of the first pin indicates whether the second processor is accessing the memory. It may be understood that, because the first pin of the first processor is connected to the second pin of the second processor, the first pin may sense a status of the second pin. Based on this, the first pin may identify, by using the sensed status of the second pin, whether the second processor is accessing the memory. This solution provides a more convenient, low-cost, low-consumption, and accurate implementation of obtaining an access status of another processor with respect to the memory.

In a possible implementation, the status of the first pin includes a first level and a second level, and the method further includes: if the status of the first pin is the first level, determining that the second processor is accessing the memory; or if the status of the first pin is the second level, determining that the second processor is not accessing the memory. This can provide a more convenient, low-cost, low-consumption, and accurate implementation of obtaining an access status of another processor with respect to a memory.

In an example, the first level is, for example, a high level, and the second level is, for example, a low level; or the first level is, for example, a low level, and the second level is, for example, a high level. This is not specifically limited in this application.

In a possible implementation, when a status of the second pin is a third level, the status of the first pin is the first level; or when a status of the second pin is a fourth level, the status of the first pin is the second level. This can support the first processor in sensing the status of the second pin based on the status of the first pin, to accurately determine whether the second processor is accessing the memory, so as to conveniently and accurately obtain the access status of the second processor with respect to the memory.

In an example, the third level is, for example, a high level, and the fourth level is, for example, a low level; or the third level is, for example, a low level, and the fourth level is, for example, a high level. This is not specifically limited in this application.

In a possible implementation, the first processor further includes a third pin, and a status of the third pin indicates whether the first processor is accessing the memory. This can help another processor know whether the first processor is accessing the memory, to prevent a conflict caused by simultaneous access to the memory by a plurality of processors, and implement more scientific and orderly memory sharing.

In a possible implementation, when the first processor is accessing the memory, the status of the third pin is a fifth level; or when the first processor is not accessing the memory, the status of the third pin is a sixth level. This can conveniently and accurately notify another processor whether the first processor is accessing the memory.

In an example, the fifth level is, for example, a high level, and the sixth level is, for example, a low level; or the fifth level is, for example, a low level, and the sixth level is, for example, a high level. This is not specifically limited in this application.

In a possible implementation, the method further includes: before the first processor accesses the memory, adjusting the status of the third pin from the sixth level to the fifth level. This can help another processor know whether the first processor is accessing the memory, to prevent a conflict caused by simultaneous access to the memory by a plurality of processors, and implement more scientific and orderly memory sharing.

In a possible implementation, that the first processor adjusts the status of the third pin from the sixth level to the fifth level includes: After receiving the service request, the first processor obtains, from the second processor, second information indicating whether the second processor is accessing the memory; and when the second information indicates that the second processor is not accessing the memory, the first processor adjusts the status of the third pin from the sixth level to the fifth level. Based on this, the first processor adjusts the status of the third pin when the first processor is about to start accessing the memory, to notify another processor in a timely manner whether the first processor is accessing the memory. In addition, to avoid a conflict that is caused by simultaneous access to the memory by the first processor and the second processor and that is caused when the second processor starts to access the memory after the first processor determines, based on the second information, that the status of the first pin is the second level and further determines that the second processor is not accessing the memory, the first processor may determine, again by using the obtained first information, whether the second processor is accessing the memory, to ensure that the first processor and the second processor do not access the memory at the same time.

In a possible implementation, that the first processor obtains the first information from the second processor includes: when the second information indicates that the second processor is accessing the memory, obtaining the first information from the second processor after waiting for preset duration. This can avoid a waste of power consumption, processing resources, and the like caused to the terminal device if the first processor continuously obtains the first information from the second processor.

In a possible implementation, the memory includes: a partition corresponding to the first processor and not corresponding to the second processor, and a partition corresponding to both the first processor and the second processor. The service request is used to request access to one or more of the following partitions in the memory: the partition corresponding to the first processor and not corresponding to the second processor, and the partition corresponding to both the first processor and the second processor. Based on this, regardless of which partition of the memory is accessed by the first processor, data storage, modification or reading of stored data, and the like can be normally performed, and a plurality of processors can share the memory in a more scientific and orderly manner.

In an example, the memory further includes a partition corresponding to the second processor and not corresponding to the first processor. Certainly, a specific partition of the memory is not limited in this application. For example, the memory may not include an exclusive partition corresponding to the first processor or the second processor.

In a possible implementation, the first processor accesses the memory to perform one or more of the following: reading data in the memory, writing data into the memory, and modifying the data in the memory. Based on this, regardless of a purpose of accessing the memory by the first processor, data access can be normally performed, and a plurality of processors can share the memory in a more scientific and orderly manner.

According to a second aspect, a chip is provided. The chip includes a processing module and one or more pins, and the processing module and the one or more pins are configured to support the chip in implementing the method according to any one of the possible implementations of the first aspect.

In an example, the chip is, for example, an AP or an MCU.

According to a third aspect, a terminal device is provided. The terminal device includes a first processor, a second processor, and a memory. The first processor and the second processor share the memory. The first processor or the second processor is configured to implement the method according to any one of the possible implementations of the first aspect.

According to a fourth aspect, a computer-readable storage medium is provided. The computer-readable storage medium stores computer program instructions. When the computer program instructions are executed by a processor, the method according to any one of the possible implementations of the first aspect is implemented.

According to a fifth aspect, a computer program product including instructions is provided. When the computer program product is run on a computer, the computer is enabled to implement the method according to any one of the possible implementations of the first aspect.

According to a sixth aspect, a chip system is provided. The chip system includes a processing circuit and a storage medium. The storage medium stores computer program instructions. When the computer program instructions are executed by a processor, the method according to any one of the possible implementations of the first aspect is implemented. The chip system may include a chip, or may include a chip and another discrete component.

### BRIEF DESCRIPTION OF DRAWINGS

FIG. 1 is a diagram of a structure of a terminal device including a dual-processor and dual-memory architecture;
FIG. 2 is a diagram of a hardware structure of a terminal device according to an embodiment of this application;
FIG. 3 is a diagram of a structure of a terminal device in which a main processor and a coprocessor share a same memory according to an embodiment of this application;
FIG. 4 is a diagram of a storage area division manner of a memory according to an embodiment of this application;
FIG. 5 is a diagram of a software structure of a terminal device according to an embodiment of this application;
FIG. 6 is an architectural diagram of a memory access process according to an embodiment of this application;
FIG. 7 is an architectural diagram of another memory access process according to an embodiment of this application;
FIG. 8 is an architectural diagram of an interaction process when a memory is accessed according to an embodiment of this application;
FIG. 9 is a flowchart of a memory access method according to an embodiment of this application;
FIG. 10 is a flowchart of another memory access method according to an embodiment of this application; and
FIG. 11A and FIG. 11B are a flowchart of a memory access process according to an embodiment of this application.

### DESCRIPTION OF EMBODIMENTS

The following describes the technical solutions in embodiments of this application with reference to the accompanying drawings in embodiments of this application. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of embodiments of this application, "a plurality of" means two or more.

The following terms "first", "second", and the like are merely intended to distinguish between different described objects, and impose no limitation on positions, sequences, priorities, quantities, content, or the like of the described objects. For example, if the described object is a "field", ordinal numbers before the "fields" in the "first field" and the "second field" do not limit positions or a sequence of the "fields". The "first" and the "second" do not limit whether the "fields" described by the "first" and the "second" are in a same message, and do not limit a sequence of the "first field" and the "second field". For another example, if the described object is a "level", ordinal numbers before the "levels" in the "first level" and the "second level" do not limit priorities of the "levels". For another example, a quantity of described objects is not limited by an ordinal number, and there may be one or more described objects. The "first apparatus" is used as an example, where there may be one or more "apparatuses". In addition, objects modified by different prefixes may be the same or different. For example, if the described object is an "apparatus", the "first apparatus" and the "second apparatus" may be apparatuses of a same type or apparatuses of different types. For another example, if the described object is a "level", the "first level" and the "second level" may be a same level or different levels. In conclusion, in embodiments of this application, use of prefix words such as ordinal numbers for distinguishing between the described objects constitutes no limitation on the described objects. For descriptions of the described objects, refer to contextual descriptions in the claims or embodiments. Use of the prefix words shall not constitute a redundant limitation.

In addition, in embodiments of this application, a "connection" may be a direct connection or an indirect connection, and may be an electrical connection or a communication connection. For example, a connection between two electrical elements A and B may mean that A is directly connected to B, or may mean that A is indirectly connected to B through another electrical element or a connection medium, or may mean that A is indirectly connected to B through another communication apparatus or a communication medium, provided that A and B can communicate with each other.

As described in the background, for consideration of the service functions, the battery life, and the like, some terminal devices use the multi-processor architecture like a dual-processor architecture, for example, a dual-processor architecture including a main processor and a coprocessor. In an example, the terminal device may include an application processor (application processor, AP) and a microprogrammed control unit (microprogrammed control unit, MCU). The AP is mainly configured to run an operating system and a multimedia application. The AP is, for example, a system on a chip (system on a chip, SOC). The MCU is sometimes also referred to as a single-chip microcomputer, and is mainly configured to perform signal control. Because the MCU features low costs and low power consumption, the MCU may also be configured to perform some simple operations.

In a possible structure, the terminal device further includes a memory that provides a data storage service for the AP, for example, an embedded multimedia card (embedded multimedia card, eMMC). Based on this, the MCU may interact with the AP, to store MCU-related data by using the memory configured for the AP.

With diversified development of terminal devices and a requirement for low power consumption of the terminal devices, more terminal devices support a low power mode (for example, an ultra power saving mode, where a specific mode name is not limited). In the low power mode, some idle hardware modules may be powered off to reduce power consumption of the terminal device. For example, in the low power mode, the AP of the terminal device and the memory (for example, the eMMC) configured for the AP may be powered off, but the MCU works normally. In this case, because the AP and the memory are powered off, the MCU cannot normally store data, normally read, modify, or delete data that has been stored in the memory, and the like.

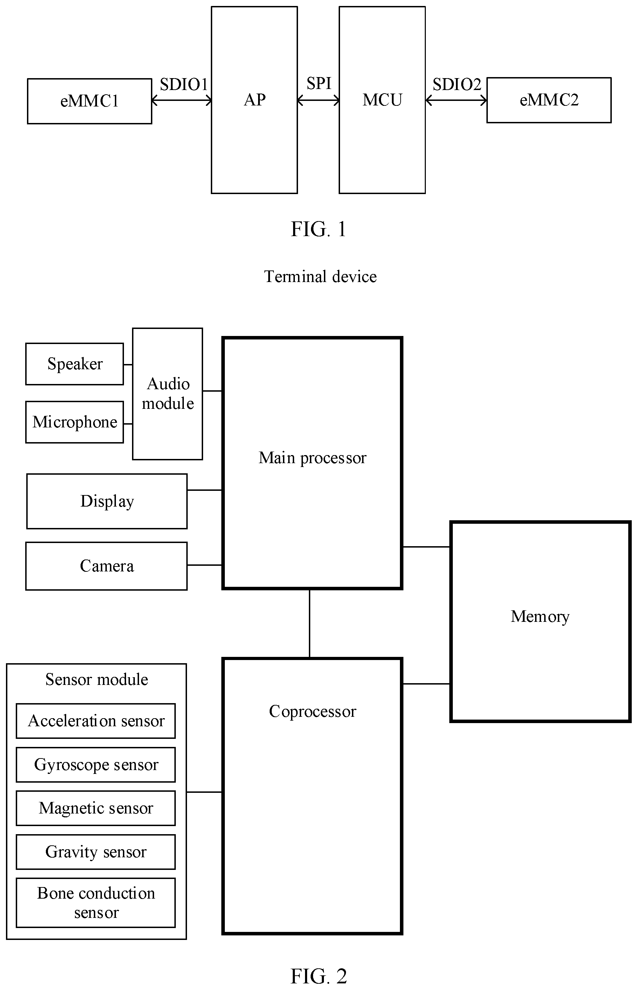

To resolve the foregoing problem of the terminal device in the low power mode, in a possible structure, the terminal device may include a plurality of memories separately configured for a plurality of processors. For example, the terminal device may use a dual-processor and dual-memory architecture. As shown in FIG. 1, the terminal device may include an eMMC1 and an eMMC2 that are respectively configured for the AP and the MCU. The AP and the MCU may be respectively connected to the eMMC1 and the eMMC2 through secure digital input and output (secure digital input and output, SDIO) interfaces (for example, an SDIO1 and an SDIO2 shown in FIG. 1), and the AP and the MCU may be connected to each other through a serial peripheral interface (serial peripheral interface, SPI) shown in FIG. 1 to perform related interaction. Based on this, regardless of whether the MCU is in a normal mode or the low power mode, the MCU can normally store data, normally read, modify, or delete data that has been stored in the memory, and the like.

However, the dual-processor and dual-memory architecture in FIG. 1 causes a split between storage space corresponding to the AP and storage space corresponding to the MCU. As a result, data (such as music) of some applications related to both the AP and the MCU is written into two memories: the eMMC1 and the eMMC2. In addition, the two memories are higher in costs, and may affect the layout of hardware in the terminal device. Especially with the diversified development of the terminal devices, challenges in both costs and layout may pose significant obstacles to the requirements for lower-cost and more compact devices.

To resolve the foregoing problem of the terminal device having the dual-processor and dual-memory architecture, and to resolve the problem that when the terminal device having the dual-processor and single-memory structure is in the low power mode, the MCU cannot normally store data and normally read, modify, or delete data that has been stored in the memory, embodiments of this application provide a solution in which a plurality of processors share a same memory. In this solution, the terminal device includes the plurality of processors, for example, includes a main processor and a coprocessor, where the plurality of processors share the same memory. Based on this, compared with the architecture in which the MCU stores the MCU-related data by using the memory configured for the AP, an architecture provided in this solution has advantages: Even if the AP and the memory configured for the AP are powered off in the low power mode, storage of the MCU-related data, normal reading, modification, and deletion of the stored data, and the like can still be normally performed.

Compared with the dual-processor and dual-memory architecture shown in FIG. 1, the architecture provided in the solution provided in embodiments of this application can avoid the problem that data of some applications related to both the AP and the MCU is repeatedly written, reduce production costs of the terminal device, and support miniaturization of the terminal device.

In addition, in the solution provided in embodiments of this application, the plurality of processors of the terminal device may share the same memory. Any processor in the plurality of processors may implement mutually exclusive access to the memory based on an obtained access status of another processor with respect to the memory, for example, information about whether the another processor is accessing the memory, thereby implementing more scientific and orderly memory sharing.

The terminal device in embodiments of this application may include but is not limited to a smartphone, a netbook, a tablet computer, a smart drawing board, a handwriting tablet, a smartwatch, a smart band, a phone watch, smart glasses, a smart camera, a palmtop computer, a vehicle-mounted computer, a personal computer (personal computer, PC), a personal digital assistant (personal digital assistant, PDA), a portable multimedia player (portable multimedia player, PMP), an augmented reality (augmented reality, AR)/virtual reality (virtual reality, VR) device, a smart television, a projection device, a motion-sensing game console in a human-computer interaction scenario, or the like. Alternatively, the terminal device may be a terminal device of another type or structure. This is not limited in this application.

In an example, refer to FIG. 2. FIG. 2 is a diagram of a hardware structure of a terminal device according to an embodiment of this application by using an example in which a main processor and a coprocessor are included, and the main processor and the coprocessor share a same memory.

As shown in FIG. 2, the terminal device may include the main processor, the coprocessor, the memory, an audio module, a speaker, a microphone, a display, a camera, a sensor module, and the like. The sensor module may include an acceleration sensor, a gyroscope sensor, a magnetic sensor, a gravity sensor, a bone conduction sensor, and the like as shown in FIG. 2. In some possible structures, the sensor module may further include other types of sensors such as a touch sensor, a pressure sensor, a barometric pressure sensor, a distance sensor, an optical proximity sensor, a fingerprint sensor, and an ambient optical sensor. This is not specifically limited in this embodiment of this application.

The main processor is mainly configured to run an operating system and a multimedia application, for example, is responsible for managing and maintaining application information and application-related user information, and is responsible for implementing system functions (for example, a music playing function and a watch face function). The main processor may include but is not limited to an AP. The coprocessor is mainly configured to perform signal control, some simple operations, and the like, for example, perform music player-related control, perform watch face-related control, perform measurement control of the sensor module, and perform calculation related to data collected by a sensor. The coprocessor may include but is not limited to a low-power processor like an MCU.

The terminal device may implement audio functions, for example, music playing and recording, through the audio module, the speaker, the microphone, the AP, and the like.

The audio module is configured to convert digital audio information into an analog audio signal for output, and is also configured to convert analog audio input into a digital audio signal. The audio module may be further configured to encode and decode an audio signal. In some embodiments, the audio module may be disposed in the main processor, or some functional modules of the audio module are disposed in the main processor.

The speaker, also referred to as a "loudspeaker", is configured to convert an audio electrical signal into a sound signal. The terminal device may play music or a hands-free call via the speaker.

The microphone, also referred to as a "mike" or a "mic", is configured to convert a sound signal into an electrical signal. When making a call or sending speech information, a user may place the mouth of the user near the microphone to make a sound, to input a sound signal to the microphone. At least one microphone C may be disposed in the terminal device. In some other embodiments, two microphones may be disposed in the terminal device, to capture a sound signal and further implement a noise reduction function. In some other embodiments, three, four, or more microphones may alternatively be disposed in the terminal device, to capture a sound signal, reduce noise, further identify a sound source, implement a directional recording function, and the like.

The acceleration sensor (or an accelerometer) may detect values of acceleration of the terminal device in various directions (usually on three axes). When the terminal device is still, a value and a direction of gravity may be detected. The acceleration sensor may be further configured to identify a posture of the terminal device, and is applied to an application like a pedometer. In some embodiments, the terminal device may obtain a motion direction, a motion speed, and the like of the user based on data detected by the acceleration sensor.

The gyroscope sensor may be configured to determine a motion posture of the terminal device in a motion process. In some embodiments, rotation directions and rotation angular velocities of the terminal device around three axes (namely, x, y, and z axes) may be determined by using the gyroscope sensor.

The magnetic sensor like a Hall effect sensor is a device for detecting corresponding physical quantities by converting variations in magnetic properties of a sensitive element caused by external factors such as a magnetic field, a current, stress and strain, temperature, and light into electrical signals. In some embodiments, included angles between the terminal device and four directions, namely, east, south, west, and north, can be measured via the magnetic sensor.

The gravity sensor may be configured to detect a magnitude and a direction of gravity applied to the terminal device. In some embodiments, the terminal device may obtain information such as a location and a height of the user based on data detected by the gravity sensor.

The bone conduction sensor may obtain a vibration signal. In some embodiments, the bone conduction sensor may obtain a vibration signal of a vibration bone of a human vocal part. The bone conduction sensor may also be in contact with a human pulse to receive a blood pressure beating signal. In some embodiments, heart rate information may be parsed based on the blood pressure beating signal obtained by the bone conduction sensor, to implement functions such as heart rate detection and sleep detection.

The display is configured to display an image, a video, and the like. The display includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like.

The memory may be configured to store computer-executable program code. For example, a computer program may include an operating system program and an application. The executable program code includes instructions. The main processor or the coprocessor runs the instructions stored in the memory, to perform various function applications and data processing of the terminal device.

For example, the main processor is the AP, and the coprocessor is an MCU. The memory may be configured to store the AP-related data and the MCU-related data. The AP-related data is, for example, AP system data, or AP application data used to implement different functions. The MCU-related data is, for example, sensor hub (sensor hub) system data, sensor hub application data, or sensor module-related data (such as motion and health data). This is not specifically limited in embodiments of this application.

In an example, the memory may be an eMMC, or the memory may include an eMMC.

In embodiments of this application, the memory may include a program storage area and a data storage area. The program storage area may store an operating system, an application required by at least one function, and the like. The data storage area may store data created during use of the terminal device, and the like. In addition, the memory may include a high-speed random access memory, and may further include a nonvolatile memory, for example, at least one magnetic disk storage device, a flash storage device, or a universal flash storage (universal flash storage, UFS). The main processor or the coprocessor runs the instructions stored in the memory, to perform various function applications and data processing of the terminal device.

It may be understood that the structure shown in FIG. 2 in this application does not constitute a specific limitation on the terminal device. In some other embodiments of this application, the terminal device may include more or fewer components than those shown in the figure. For example, the terminal device may further include one or more other processing units such as a modem processor, a graphics processing unit (graphics processing unit, GPU), an image signal processor (image signal processor, ISP), a flight controller, a video codec, a digital signal processor (digital signal processor, DSP), a baseband processor, and a neural-network processing unit (neural-network processing unit, NPU). Different processing units may be independent devices, or may be integrated into one or more processors. For another example, the terminal device may further include one or more devices such as a charging management module, a power management module, a battery, an antenna, a mobile communication module, a wireless communication module, a button, and an indicator.

Alternatively, the terminal device may combine some components, or split some components, or have a different component arrangement. The components shown in FIG. 2 may be implemented by hardware, software or a combination of software and hardware.

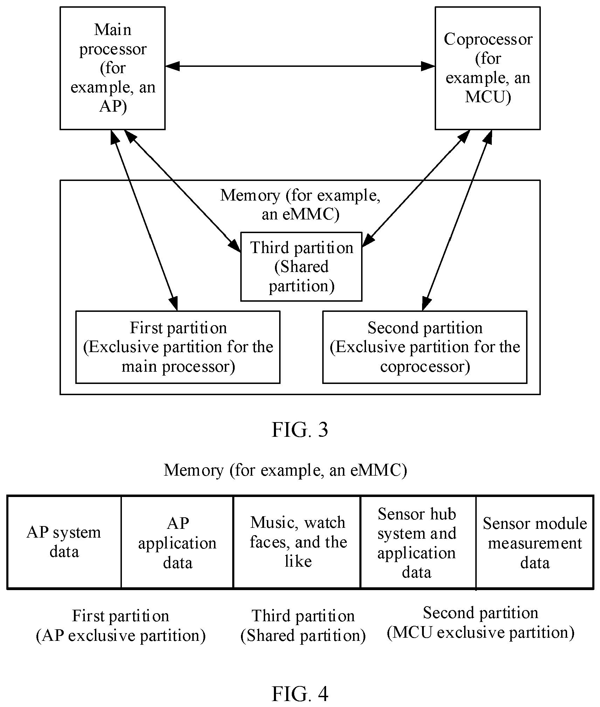

In an example, refer to FIG. 3. FIG. 3 is a diagram of a structure of a terminal device according to an embodiment of this application by using an example in which a main processor and a coprocessor are included, and the main processor and the coprocessor share a same memory. As shown in FIG. 3, the main processor is, for example, an AP, the coprocessor is, for example, an MCU, and the memory shared by the main processor and the coprocessor is, for example, an eMMC.

In some embodiments, the memory may include a plurality of partitions, and the plurality of partitions may include an exclusive partition for the main processor and an exclusive partition for the coprocessor, for example, a first partition (namely, the exclusive partition for the main processor) and a second partition (that is, the exclusive partition for the coprocessor) shown in FIG. 3. In this embodiment of this application, the exclusive partition is used to provide a data access service for a specific processor, including providing a data storage service, a data reading service, and the like, and cannot provide a data access service for another processor. To be specific, the first partition of the memory shown in FIG. 3 is used to store data from the main processor and can support the main processor in reading data stored in the first partition, and the first partition cannot store data from the coprocessor and cannot support the coprocessor in reading the data stored in the first partition. Similarly, the second partition of the memory shown in FIG. 3 is used to store the data from the coprocessor and can support the coprocessor in reading data stored in the second partition, and the second partition cannot store the data from the main processor and cannot support the main processor in reading the data stored in the second partition.

In some embodiments, to avoid the problem that data of some applications related to both the AP and the MCU is repeatedly written, in a possible structure, as shown in FIG. 3, in addition to the first partition and the second partition that are respective exclusive partitions for the main processor and the coprocessor, the memory may further include a third partition (namely, a shared partition) that the main processor and the coprocessor can share. The third partition shown in FIG. 3 may not only store the data from the main processor and support the main processor in reading data stored in the third partition, but also store the data from the coprocessor and support the coprocessor in reading the data stored in the third partition.

In some embodiments, the first partition shown in FIG. 3 may be used to store related data of functions or applications related to the main processor (for example, the AP), the second partition shown in FIG. 3 may be used to store related data of functions or applications related to the coprocessor (for example, the MCU), and the third partition shown in FIG. 3 may be used to store related data of functions or applications related to both the main processor (for example, the AP) and the coprocessor (for example, the MCU).

In an example, refer to FIG. 4. FIG. 4 is a diagram of a storage area division manner of a memory according to an embodiment of this application by using an example in which a terminal device is a smartwatch, and the terminal device includes an AP and an MCU. As shown in FIG. 4, the memory, for example, an eMMC, may include a first partition exclusively occupied by the AP, a second partition exclusively occupied by the MCU, and a third partition shared by the AP and the MCU.

The first partition (for example, an AP exclusive partition) shown in FIG. 4 may be used to store related data of functions or applications related to the AP, such as AP system data, and application data of an AP application corresponding to one or more functions provided by the AP (which is referred to as "AP application data" in the following for short). For example, the AP system data is, for example, AP system-related instructions. The AP may execute various AP system functions of the terminal device by running the AP system-related instructions stored in the first partition. In addition, the AP application data is, for example, AP application-related instructions. The AP may execute AP application functions and related data processing of the terminal device by running the AP application-related instructions stored in the first partition.

In an example, as shown in FIG. 4, the first partition may also include a plurality of subpartitions, and different subpartitions may be used to store different types of data, for example, separately used to store the AP system data and the AP application data.

The second partition (for example, an MCU exclusive partition) shown in FIG. 4 may be used to store related data of functions or applications related to the MCU, such as sensor hub (sensor hub) system data and application data, and sensor module measurement data (such as motion and health data). For example, the sensor hub system data, for example, instructions related to a sensor hub system, are stored. The MCU may execute various sensor hub system functions of the terminal device by running the instructions that are related to the sensor hub system and that are stored in the second partition. The sensor hub application data is, for example, instructions related to a sensor hub application. The MCU may execute MCU application functions and related data processing of the terminal device by running the instructions that are related to the sensor hub application and that are stored in the second partition. The related data processing is, for example, calculating and processing the sensor module measurement data to obtain a heart rate status, a sleep status, a step counting status, a motion and health status, and the like of the user. The sensor module measurement data is, for example, heart rate data, sleep data, pedometer data, and motion and health data of the user obtained through measurement of the sensor module.

In an example, as shown in FIG. 4, the second partition may also include a plurality of subpartitions, and different subpartitions may be used to store different types of data, for example, separately used to store the sensor hub system data and application data, and the sensor module measurement data.

The third partition (for example, the shared partition) shown in FIG. 4 may be used to store related data of functions or applications, such as music and a watch face, related to both the main processor (for example, the AP) and the coprocessor (for example, the MCU).

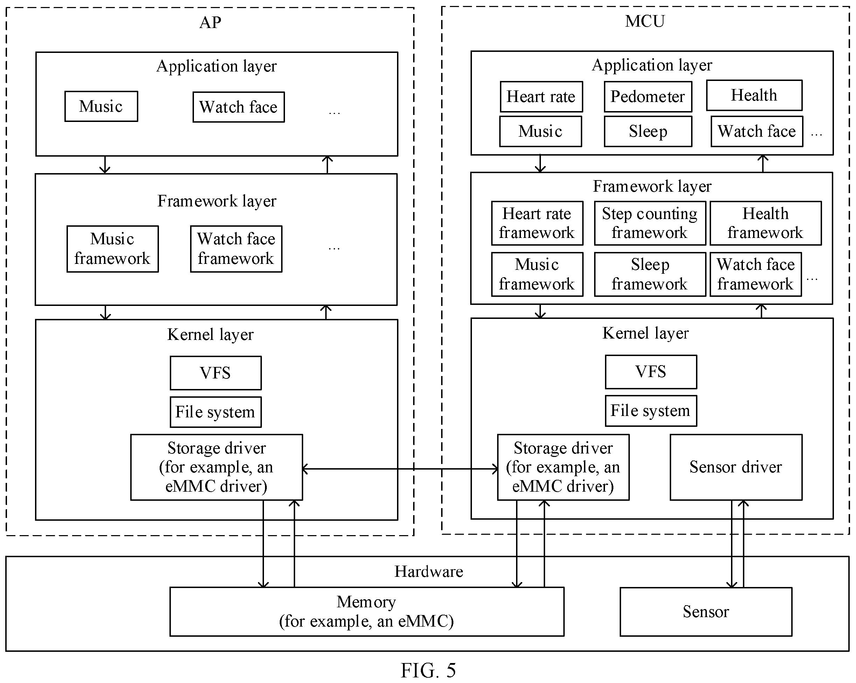

In an example, refer to FIG. 5. FIG. 5 is a diagram of a software structure according to an embodiment of this application by using an example in which a main processor is an AP and a coprocessor is an MCU. As shown in FIG. 5, the terminal device may include an AP system, an MCU system, and a memory (for example, an eMMC). The AP system and the MCU system include an application layer, a framework layer (framework, FWK), and a kernel layer from top to bottom.

The application layer may include a series of applications. As shown in FIG. 5, the application layer of the AP system may include applications such as music and a watch face, and the application layer of the MCU system may include applications such as a heart rate, a pedometer, health, music, sleep, and a watch face.

The framework layer provides an application programming interface (application programming interface, API) and a programming framework for an application at the application layer. As shown in FIG. 5, the framework layer of the AP system may provide a music framework, a watch face framework, and the like for the upper-layer AP applications, and the framework layer of the MCU system may provide a heart rate framework, a step counting framework, a health framework, a music framework, a sleep framework, a watch face framework, and the like for the upper-layer MCU applications.

The kernel layer is a layer between hardware and software. The kernel layer may include a driver corresponding to the hardware, for example, a storage driver and one or more sensor drivers shown in FIG. 5. The hardware is, for example, the memory (for example, the eMMC) and one or more sensors shown in FIG. 5.

The memory (for example, the eMMC) shown in FIG. 5 may be configured to store AP-related data and MCU-related data. The AP-related data is, for example, AP system data, or AP application data used to implement different functions. The MCU-related data is, for example, sensor hub (sensor hub) system data, sensor hub application data, or sensor module-related data (such as motion and health data). This is not specifically limited in embodiments of this application. The sensor shown in FIG. 5 may include but is not limited to one or more of the following: a speed sensor, a gyroscope sensor, a magnetic sensor, a gravity sensor, a bone conduction sensor, and the like. The sensor may be configured to measure one or more of the following data: heart rate data, sleep data, pedometer data, motion and health data, and the like.

Certainly, specific hardware included in the terminal device is not limited in this embodiment of this application. For example, the terminal device may further include one or more pieces of hardware such as a camera, a display (a touchscreen), a camera, and a microphone. Correspondingly, the kernel layer of the AP system and the kernel layer of the MCU system of the terminal device may further include one or more drivers such as a camera driver, a display driver, and a microphone driver.

In some embodiments, as shown in FIG. 5, the kernel layer may further include a file system related to file storage. The file system is mainly used to manage and store file information, for example, organize and manage files stored in the memory. For example, the file system may be used to store metadata of one or more pieces of data in the memory, for example, an index node number, a file size, access permission, creation time, modification time, and a location of data in the memory. For another example, the file system may be used to store a directory entry of one or more pieces of data in the memory, for example, a name of data, an index node pointer, and a hierarchical association relationship with another directory entry.

In some embodiments, as shown in FIG. 5, the kernel layer may further include a virtual file system (virtual file system, VFS), serving as an interface layer between the file system and an upper-layer service framework, to abstract details of the file system, so that different file systems appear to be the same to an upper-layer system core and other processes running in the system. For example, the VFS may define a group of data structures and standard interfaces that are supported by all file systems.

It should be noted that FIG. 5 is merely an example of a diagram of the software structure of the terminal device, where only layers and software modules related to the solutions of this application are simply listed. During actual application, the software system of the terminal device, for example, the AP system or the MCU system, may further include another layer, and each layer may further include another software module configured to implement one or more functions or services. This is not specifically limited in embodiments of this application.

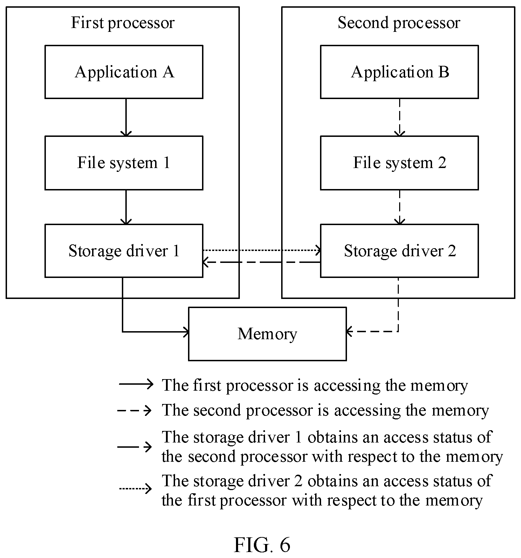

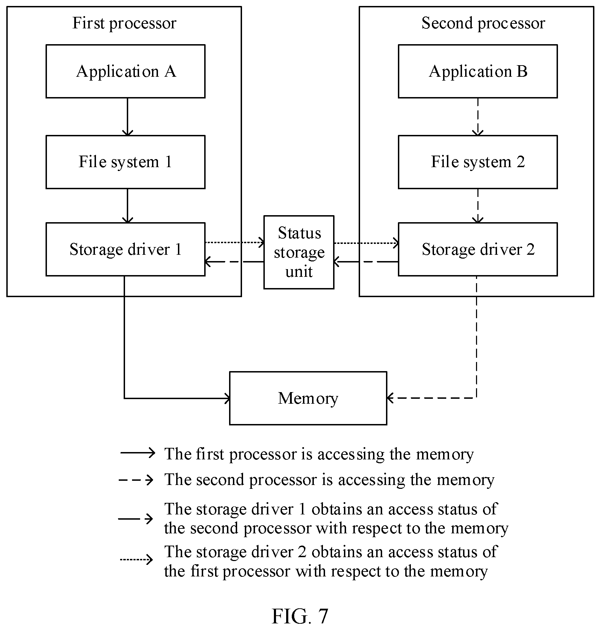

In some embodiments, when a processor needs to access a memory, for example, when an application A in a first processor shown in FIG. 6 or FIG. 7 needs to access the memory, the application A may initiate, to a file system 1 of the first processor, a service request for accessing the memory. After receiving the service request from the application A, the file system 1 may invoke a storage driver 1 to obtain an access status of another processor (for example, a second processor) with respect to the memory, for example, whether the another processor (for example, the second processor) is accessing the memory. If no processor accesses the memory, the first processor starts to access the memory in response to the service request of the application A. If the another processor (for example, the second processor) is accessing the memory, the first processor temporarily does not respond to the service request of the application A, and temporarily does not access the memory until no processor is accessing the memory.

Similarly, when an application B in the second processor shown in FIG. 6 or FIG. 7 needs to access the memory, the application B may initiate, to a file system 2 of the second processor, a service request for accessing the memory. After receiving the service request from the application B, the file system 2 may invoke a storage driver 2 to obtain an access status of another processor (for example, the first processor) with respect to the memory, for example, whether the another processor (for example, the first processor) is accessing the memory. If no processor accesses the memory, the second processor starts to access the memory in response to the service request of the application B. If the another processor (for example, the first processor) is accessing the memory, the second processor temporarily does not respond to the service request of the application B, and temporarily does not access the memory until no processor is accessing the memory.

In a possible implementation, a storage driver of the processor may directly obtain, from a storage driver of the another processor, whether the another processor is accessing the memory.

For example, as shown in FIG. 6, the storage driver 1 of the first processor may directly obtain, from the storage driver 2 of the second processor, whether the second processor is accessing the memory. For example, pins are separately disposed on the storage driver 1 of the first processor and the storage driver 2 of the second processor. For example, a first pin is disposed on the storage driver 1 of the first processor, a second pin is disposed on the storage driver 2 of the second processor, and the first pin is connected to the second pin. Based on this, the first processor may obtain a status of the second pin by obtaining a status of the first pin, to further determine whether the second processor is accessing the memory. For example, it is assumed that the second processor is accessing the memory, and the status of the second pin is usually a third level. When the status of the second pin is the third level, the status of the first pin that is of the first processor and that is connected to the second pin is a first level. Based on this, if the status of the first pin is the first level, the first processor may determine that the status of the second pin is the third level, and further determine that the second processor is accessing the memory. For another example, it is assumed that the second processor is not accessing the memory, and the status of the second pin is usually a fourth level. When the status of the second pin is the fourth level, the status of the first pin that is of the first processor and that is connected to the second pin is a second level. Based on this, if the status of the first pin is the second level, the first processor may determine that the status of the second pin is the fourth level, and further determine that the second processor is not accessing the memory.

Similarly, as shown in FIG. 6, the storage driver 2 of the second processor may directly obtain, from the storage driver 1 of the first processor, whether the first processor is accessing the memory. For example, a third pin is disposed on the storage driver 1 of the first processor, a fourth pin is disposed on the storage driver 2 of the second processor, and the third pin is connected to the fourth pin. Based on this, the second processor may obtain a status of the third pin by obtaining a status of the fourth pin, to further determine whether the first processor is accessing the memory. For example, it is assumed that the first processor is accessing the memory, and the status of the third pin is usually a third level. When the status of the third pin is the third level, the status of the fourth pin that is of the second processor and that is connected to the third pin is a first level. Based on this, if the status of the fourth pin is the first level, the second processor may determine that the status of the third pin is the third level, and further determine that the first processor is accessing the memory. For another example, it is assumed that the first processor is not accessing the memory, and the status of the third pin is usually a fourth level. When the status of the third pin is the fourth level, the status of the fourth pin that is of the second processor and that is connected to the third pin is a second level. Based on this, if the status of the fourth pin is the second level, the second processor may determine that the status of the third pin is the fourth level, and further determine that the first processor is not accessing the memory.

In an example, the first level is, for example, a high level, and the second level is, for example, a low level; or the first level is, for example, a low level, and the second level is, for example, a high level.

In an example, the third level is, for example, a high level, and the fourth level is, for example, a low level; or the fourth level is, for example, a low level, and the third level is, for example, a high level.

In an example, the first pin, the second pin, the third pin, or the fourth pin is, for example, a general-purpose input/output (general-purpose input/output, GPIO) pin. Certainly, the first pin, the second pin, the third pin, and the fourth pin may alternatively be other pins. This is not specifically limited in embodiments of this application.

In a possible implementation, as shown in FIG. 7, the terminal device may include a status storage unit, configured to store a status flag bit indicating whether each processor is accessing the memory, for example, store a status flag bit used to identify whether each processor is accessing the memory.

For example, in a process in which the first processor writes data into the memory or reads data from the memory by using the storage driver 1 in response to the service request of the application A, the status storage unit may store a first flag, where the first flag is used to identify that the first processor is accessing the memory. For example, the storage driver 1 of the first processor may write the first flag into the status storage unit when starting to access the memory, and delete the first flag when ending to access the memory. Based on this, in a process in which the first processor accesses the memory, when the application B in the second processor has a requirement for accessing the memory, the second processor may determine, based on the first flag obtained from the status storage unit, that the first processor is accessing the memory.

Similarly, in a process in which the second processor writes data into the memory or reads data from the memory by using the storage driver 2 in response to the service request of the application B, the status storage unit may store a second flag, where the second flag is used to identify that the second processor is accessing the memory. For example, the storage driver 2 of the second processor may write the second flag into the status storage unit when starting to access the memory, and delete the second flag when ending to access the memory. Based on this, in a process in which the second processor accesses the memory, when the application A in the first processor has a requirement for accessing the memory, the first processor may determine, based on the second flag obtained from the status storage unit, that the second processor is accessing the memory.

The following embodiments describe in detail a memory access method provided in embodiments of this application by using an example in which a storage driver of a first processor directly obtains, from a storage driver of another processor like a second processor, whether the second processor is accessing a memory.

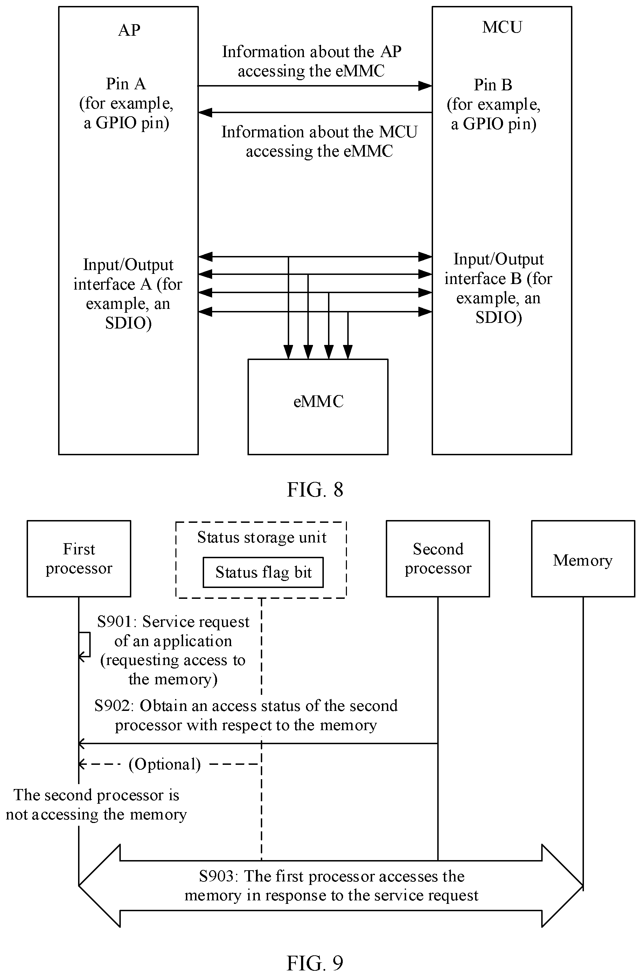

In an example, refer to FIG. 8. FIG. 8 is an architectural diagram of an interaction process when a memory is accessed according to an embodiment of this application by using an example in which a terminal device includes an AP and an MCU and a memory is an eMMC. As shown in FIG. 8, the AP may obtain a status of a pin B of the MCU by using a status of a pin A, to determine whether the MCU is accessing the eMMC; and the MCU may obtain the status of the pin A of the AP by using the status of the pin B, to determine whether the AP is accessing the eMMC. For example, the pin A or the pin B may be a GPIO pin or the like. This is not specifically limited. When determining, based on whether the determined MCU processor is accessing the eMMC, whether to access the eMMC, the AP may write data into the eMMC, read data from the eMMC, or modify data in the eMMC through an input/output interface A. When determining, based on whether the determined AP processor is accessing the eMMC, whether to access the eMMC, the MCU may write data into the eMMC, read data from the eMMC, or modify data A in the eMMC through an input/output interface B. For example, the input/output interface A or the input/output interface B is an SDIO interface or the like. This is not specifically limited.

It should be noted that FIG. 8 uses only an example in which the pin A may be used as a pin that is used by the AP to obtain information indicating whether the MCU is accessing the eMMC, and may also be used as a pin that indicates, to another processor (for example, the MCU), information indicating whether the AP is accessing the eMMC. However, whether the two pins are represented by a status of a same pin is not limited in this application. For example, in some embodiments, the AP may include a first pin and a third pin. The first pin is used by the AP to obtain the information indicating whether the MCU is accessing the eMMC, and the third pin indicates, to the another processor (for example, the MCU), whether the AP is accessing the eMMC.

Similarly, the MCU may obtain, by using the pin B, the information indicating whether the AP is accessing the eMMC, and indicate, to the another processor (for example, the AP) by using the pin B, whether the MCU is accessing the eMMC. Alternatively, in some embodiments, the MCU may include a second pin and a fourth pin. The fourth pin is used by the MCU to obtain the information indicating whether the AP is accessing the eMMC, and the second pin indicates, to the another processor (for example, the AP), whether the MCU is accessing the eMMC.

In an example, refer to FIG. 9. FIG. 9 is a flowchart of a memory access method according to an embodiment of this application by using an example in which a first processor and a second processor in a terminal device share a same memory. As shown in FIG. 9, the method may be implemented based on S901 to S903.

S901: The first processor receives a service request of an application, where the service request is used to request access to the memory.

The first processor may be any one of a plurality of processors of the terminal device. For example, the first processor may be a main processor or a coprocessor. A terminal device including an AP and an MCU is used as an example. The first processor may be the AP or the MCU.

In some embodiments, the service request may be a request initiated by an application in the first processor. In an example, the application may include but is not limited to any one or more of the following applications: music, a heart rate, a pedometer, health, sleep, a watch face, and the like. This is not specifically limited in this embodiment of this application, and may be determined based on a specific application installed in the first processor, a specific function of each application, a specific application scenario, and the like.

For example, the first processor is the AP, and the application that initiates the service request is an application such as a music application or a watch face application. For example, the first processor is the MCU, and the application that initiates the service request is an application such as a heart rate application, a pedometer, a health application, a music application, a sleep application, or a watch face application.

In some embodiments, a purpose of accessing the memory by the application by using the service request may include but is not limited to one or more of the following: reading data in the memory, writing data into the memory, and modifying the data in the memory. This is not specifically limited in this embodiment of this application, and may be determined based on a specific function of the application, a specific application scenario, and the like.

In some embodiments, the purpose of accessing the memory by the application by using the service request may include but is not limited to accessing a partition (namely, an exclusive partition for the first processor) corresponding to the first processor and not corresponding to the second processor, and/or a partition (namely, a shared partition of the first processor and the second processor) corresponding to both the first processor and the second processor.

The exclusive partition for the first processor is configured to store data from the first processor and can support the first processor in reading data stored in the exclusive partition for the first processor. The exclusive partition for the first processor cannot store data from another processor (for example, the second processor) and cannot support the another processor in reading the data stored in the exclusive partition for the first processor. The shared partition may not only store the data from the first processor and support the first processor in reading data stored in the shared partition, but also store the data from the another processor (for example, the second processor) and support the another processor in reading the data stored in the shared partition.

In some embodiments, the memory may further include an exclusive partition for the second processor. The exclusive partition for the second processor is configured to store data from the second processor and can support the second processor in reading data stored in the exclusive partition for the second processor. The exclusive partition for the second processor cannot store data from another processor (for example, the first processor) and cannot support the another processor in reading the data stored in the exclusive partition for the second processor.

S902: The first processor obtains an access status of the second processor with respect to the memory.

In some embodiments, the first processor may obtain second information, where the second information indicates the access status of the second processor with respect to the memory, for example, whether the second processor is accessing the memory.

In a possible implementation, as shown in FIG. 9, the first processor may obtain, from the second processor, the access status of the second processor with respect to the memory, for example, obtain, from the second processor, the second information indicating whether the second processor is accessing the memory.

In an example, the first processor includes a first pin, the second processor includes a second pin, the first pin is connected to the second pin, and the first processor may obtain the second information by obtaining a status of the first pin, that is, determine whether the second processor is accessing the memory. The status of the first pin indicates whether the second processor is accessing the memory. For example, the status of the first pin may be indicated by using a level. For example, the status of the first pin includes a first level and a second level.

For example, if the status of the first pin is the first level, it is determined that the second processor is accessing the memory; or if the status of the first pin is the second level, it is determined that the second processor is not accessing the memory. The first level is, for example, a high level, and the second level is, for example, a low level; or the first level is, for example, a low level, and the second level is, for example, a high level. This is not specifically limited.

It may be understood that it is assumed that the second processor is not accessing the memory, and in this case, the second processor may set a status of the second pin to a fourth level. When the status of the second pin is the fourth level, the status of the first pin that is of the first processor and that is connected to the second pin is the second level. Based on this, if the status of the first pin is the second level, the first processor may determine that the status of the second pin is the fourth level, and further determine that the second processor is not accessing the memory. In addition, it is assumed that the second processor is accessing the memory, and in this case, the second processor may set a status of the second pin to a third level. When the status of the second pin is the third level, the status of the first pin that is of the first processor and that is connected to the second pin is the first level. Based on this, if the status of the first pin is the first level, the first processor may determine that the status of the second pin is the third level, and further determine that the second processor is accessing the memory. The third level is, for example, a high level, and the fourth level is, for example, a low level; or the third level is, for example, a low level, and the fourth level is, for example, a high level. This is not specifically limited.

In another possible implementation, the first processor may directly obtain, from a storage driver of another processor like the second processor of the terminal device, whether the another processor is accessing the memory; or the first processor may obtain, from another module independent of the first processor and the second processor, for example, a status storage unit, whether the another processor is accessing the memory.

In an example, as shown in FIG. 9, the terminal device may include the status storage unit. The status storage unit is configured to store a status flag bit indicating whether each processor is accessing the memory, for example, store a status flag bit indicating whether each processor is accessing the memory. The first processor may obtain, from the status storage unit, an access status of the second processor with respect to the memory, for example, obtain, from the status storage unit, the second information indicating whether the second processor is accessing the memory.

For example, in a process in which the second processor writes data into the memory or reads data from the memory in response to a service request of an application, the status storage unit may store a second flag, where the second flag is used to identify that the second processor is accessing the memory. Based on this, in a process in which the second processor accesses the memory, the first processor may obtain the status flag bit from the status storage unit, and determine, based on the status flag bit (for example, the second identifier), that the second processor is accessing the memory. Alternatively, when the second processor accesses the memory, the status storage unit does not store the second flag to represent that the second processor is not accessing the memory. Based on this, the first processor may obtain the status flag bit from the status storage unit, and determine, based on the status flag bit (for example, the second identifier is not included), that the second processor is not accessing the memory.

A specific manner and a specific process in which the first processor obtains the access status of the second processor with respect to the memory in S902 are not specifically limited in this embodiment of this application.

In addition, a specific form of the information indicating the access status of the second processor with respect to the memory is not limited in this embodiment of this application. For example, in some examples, the information (for example, the second information) indicating the access status of the second processor with respect to the memory may be in a plaintext form like a direct indication. In some other examples, the information (for example, the second information) indicating the access status of the second processor with respect to the memory may be in an implicit form, for example, a parameter indication like a level indication, or a preset action (for example, no reply) indication. This is not specifically limited in this embodiment of this application.

In some embodiments, an execution result of S902 is that the second processor is not accessing the memory (for example, the second information indicates that the second processor is not accessing the memory). In this case, the first processor performs S903 shown in FIG. 9.

S903: The first processor accesses the memory in response to the service request.

A specific operation in which the first processor accesses the memory in response to the service request is related to a purpose of accessing the memory by an application by using the service request. For example, it is assumed that the purpose of accessing the memory by the application by using the service request is to read first data in the memory. In this case, the first processor reads, from the memory in response to the service request, the first data that the application needs to read. For another example, it is assumed that the purpose of accessing the memory by the application by using the service request is to write second data into the memory. In this case, the first processor writes, into the memory in response to the service request, the second data that the application needs to write. For another example, it is assumed that the purpose of accessing the memory by the application by using the service request is to modify third data in the memory. In this case, the first processor modifies the third data in the memory in response to the service request.

In some embodiments, the first processor may set a status of a third pin, so that when the first processor is accessing the memory, the status of the third pin is a fifth level, where the status of the third pin being the fifth level indicates that the first processor is accessing the memory. In a possible implementation, after the first processor determines, based on the execution result of S902, that the second processor is not accessing the memory, and before the first processor accesses the memory, the first processor may adjust the status of the third pin from a sixth level to the fifth level, where the status of the third pin being the sixth level indicates that the first processor is not accessing the memory. This can help another processor know that the first processor is accessing the memory, to prevent a conflict caused by simultaneous access to the memory by a plurality of processors, and implement more scientific and orderly memory sharing.

In some embodiments, after S903 is performed, that is, after the first processor ends access to the memory, the first processor may reset the status of the third pin, so that when the first processor is not accessing the memory, the status of the third pin is the sixth level. This can help another processor know that the first processor is not accessing the memory, to implement more scientific and orderly memory sharing.

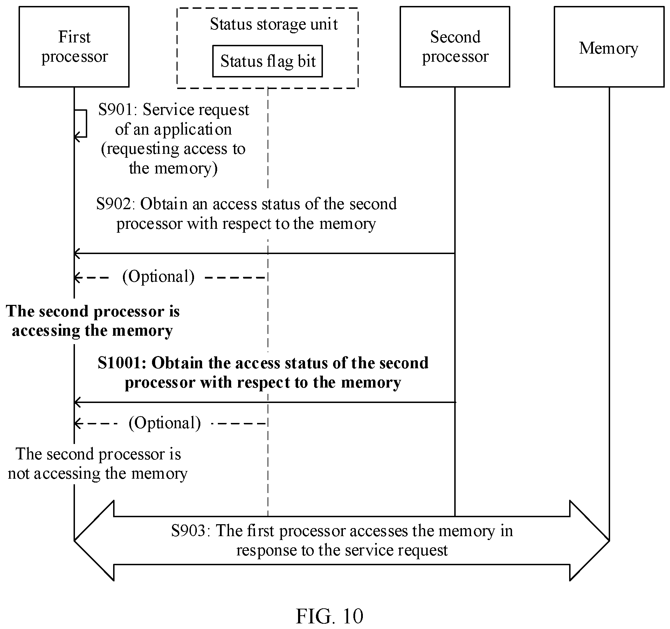

In some embodiments, the execution result of S902 is that the second processor is accessing the memory (for example, the second information indicates that the second processor is accessing the memory). In this case, the first processor temporarily does not access the memory, obtains, after a period of time, an access status of the second processor with respect to the memory again, and performs S903 shown in FIG. 10 when the second processor is not accessing the memory. The first processor may obtain, through S1001 shown in FIG. 10, the access status of the second processor with respect to the memory again.

S1001: The first processor obtains the access status of the second processor with respect to the memory.

In some embodiments, the first processor may obtain first information, where the first information indicates the access status of the second processor with respect to the memory, for example, whether the second processor is accessing the memory.

In a possible implementation, as shown in FIG. 10, the first processor may obtain, from the second processor, the access status of the second processor with respect to the memory, for example, obtain, from the second processor, the first information indicating whether the second processor is accessing the memory.

In an example, the first processor may obtain the second information by obtaining the status of the first pin, that is, determine whether the second processor is accessing the memory. For example, if the status of the first pin is the second level, the first processor may determine that the second processor is not accessing the memory; or if the status of the first pin is the first level, the first processor may determine that the second processor is accessing the memory. The first level is, for example, a high level, and the second level is, for example, a low level; or the first level is, for example, a low level, and the second level is, for example, a high level. This is not specifically limited.

In another possible implementation, as shown in FIG. 10, the terminal device may include a status storage unit. The status storage unit is configured to store a status flag bit indicating whether each processor is accessing the memory, for example, store a status flag bit indicating whether each processor is accessing the memory. The first processor may obtain, from the status storage unit, the access status of the second processor with respect to the memory, for example, obtain, from the status storage unit, the first information indicating whether the second processor is accessing the memory.

For example, if the status flag bit includes a second identifier, the first processor may determine that the second processor is accessing the memory; or if the status flag bit does not include a second identifier, the first processor may determine that the second processor is not accessing the memory.

It should be noted that a specific form of the information indicating the access status of the second processor with respect to the memory is not limited in this embodiment of this application. For example, in some examples, the information (for example, the first information) indicating the access status of the second processor with respect to the memory may be in a plaintext form like a direct indication. In some other examples, the information (for example, the first information) indicating the access status of the second processor with respect to the memory may be in an implicit form, for example, a parameter indication like a level indication, or a preset action (for example, no reply) indication. This is not specifically limited in this embodiment of this application.

In a possible implementation, if the execution result of S902 is that the second processor is accessing the memory (for example, the second information indicates that the second processor is accessing the memory), the first processor may temporarily not access the memory, and cyclically obtain the first information based on a specific cycle T (for example, every 100 milliseconds), for example, obtain the first information from the second processor or the status storage unit. Based on this, after the second processor ends access to the memory, the first processor may determine, based on the obtained first information, that the second processor is not accessing the memory, and then perform S903. Alternatively, when the second processor does not end access to the memory, the first processor determines, based on the obtained first information, that the second processor is accessing the memory, and then continues to cyclically obtain the first information from the second processor based on the cycle T.

In another possible implementation, if the execution result of S902 is that the second processor is accessing the memory (for example, the second information indicates that the second processor is accessing the memory), the first processor may indicate the second processor to notify the first processor after the second processor ends access to the memory. For example, the first processor may start an interrupt monitoring function, where after the interrupt monitoring function is started, the second processor actively notifies the first processor after the second processor ends access to the memory. It may be understood that, compared with the implementation in which the first processor cyclically obtains the first information, this implementation can avoid a waste of power consumption, processing resources, and the like caused to the terminal device if the first processor continuously obtains the first information.

In another possible implementation, if the execution result of S902 is that the second processor is accessing the memory (for example, the second information indicates that the second processor is accessing the memory), the first processor may wait for a period of time, for example, wait for preset duration (for example, 5 milliseconds), and then obtain the first information, for example, obtain the first information from the second processor or the status storage unit. Based on this, after the second processor ends access to the memory, the first processor may determine, based on the obtained first information, that the second processor is not accessing the memory, and then perform S903. Alternatively, when the second processor does not end access to the memory, the first processor determines, based on the obtained first information, that the second processor is accessing the memory, and then continues to cyclically obtain the first information from the second processor based on the cycle T. It may be understood that, compared with the implementation in which the first processor cyclically obtains the first information, this implementation can avoid a waste of power consumption, processing resources, and the like caused to the terminal device if the first processor continuously obtains the first information.

A specific manner and a specific process in which the first processor obtains the access status of the second processor with respect to the memory in S1001 are not specifically limited in this embodiment of this application.

It should be noted that FIG. 9 and FIG. 10 are merely examples in which the terminal device includes the first processor and the second processor. A quantity of processors that share the same memory in the terminal device is not limited in this embodiment of this application. For example, in some embodiments, the terminal device includes a third processor different from the first processor and the second processor. In this case, in addition to obtaining the access status of the second processor with respect to the memory, the first processor further obtains an access status of the third processor with respect to the memory. Further, when other processors such as the second processor and the third processor are not accessing the memory, the first processor performs S903 shown in FIG. 9. When one of the other processors is accessing the memory, the first processor temporarily does not access the memory, and performs S903 shown in FIG. 10 until it is determined, based on an execution result of S1001 shown in FIG. 10, that the other processors such as the second processor and the third processor are not accessing the memory.

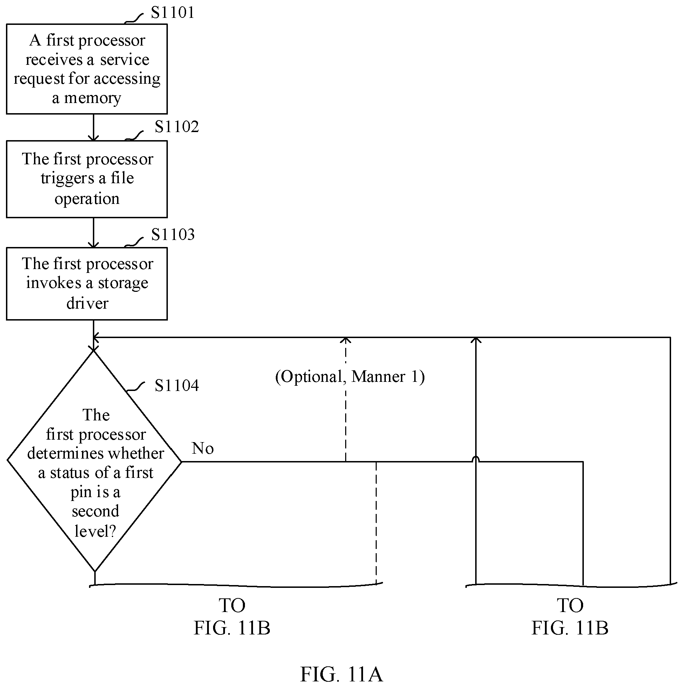

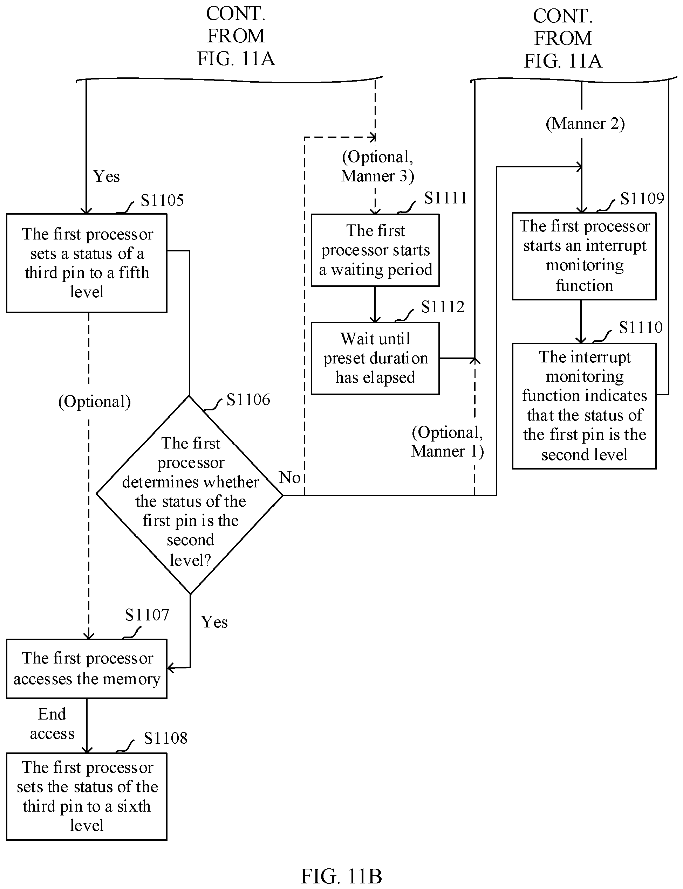

In an example, refer to FIG. 11A and FIG. 11B. FIG. 11A and FIG. 11B are a flowchart of a memory access process according to an embodiment of this application by using an example in which a first processor accesses a memory. As shown in FIG. 11A and FIG. 11B, the memory access process may include S1101 to S1108.

S1101: The first processor receives a service request for accessing the memory.

The first processor may be any one of a plurality of processors of the terminal device. For example, the first processor may be a main processor or a coprocessor. A terminal device including an AP and an MCU is used as an example. The first processor may be the AP or the MCU.

In some embodiments, the service request may be a request initiated by an application in the first processor, for example, including but not limited to any one or more of the following applications: music, a heart rate, a pedometer, health, sleep, a watch face, and the like.

In some embodiments, a purpose of a service requester may include but is not limited to one or more of the following: reading data in the memory, writing data into the memory, and modifying the data in the memory. This is not specifically limited in this embodiment of this application. For example, the purpose of the service requester may include but is not limited to one or more of the following: reading data in an exclusive partition for the first processor in the memory, reading data in a shared partition in the memory, writing data into the exclusive partition for the first processor in the memory, writing data into the shared partition in the memory, modifying the data in the exclusive partition for the first processor in the memory, and modifying the data in the shared partition in the memory.

S1102: The first processor triggers a file operation.

In an example, the first processor triggers the file operation to trigger a specific access operation, such as writing or reading.

In an example, if a purpose of the service request is reading, the first processor may trigger a read operation, for example, the first processor may invoke a read instruction. If the purpose of the service request is writing, the first processor may trigger a read/write operation, for example, the first processor may invoke a write instruction.

S1103: The first processor invokes a storage driver.

In an example, the first processor invokes the storage driver to obtain a status indicating whether another processor (for example, a second processor) is accessing the memory.

In some embodiments, the storage driver of the first processor includes a first pin, and a status of the first pin indicates whether a memory (for example, the second processor) to which a second pin connected to the first pin belongs is accessing the memory. Based on this, the first processor may invoke the storage driver to obtain the status of the first pin, so as to determine, based on the status of the first pin, whether another processor (for example, the second processor) is accessing the memory.

In an example, the first pin or the second pin is, for example, a GPIO pin. Certainly, the first pin or the second pin may alternatively be another type of pin. This is not specifically limited in this embodiment of this application.

Certainly, a specific manner in which the first processor invokes the storage driver to obtain the access status of another processor (for example, the second processor) with respect to the memory is not limited in this embodiment of this application. For example, in some embodiments, the first processor invokes the storage driver to obtain, from a status storage unit, a status flag bit indicating whether another processor (for example, the second processor) is accessing the memory, so as to determine, based on the status flag bit, whether the another processor (for example, the second processor) is accessing the memory.

In the example shown in FIG. 11A and FIG. 11B of this application, only a manner in which the first processor invokes the storage driver to obtain the status of the first pin, so as to determine, based on the status of the first pin, whether another processor is accessing the memory is used as an example.

S1104: The first processor determines whether the status of the first pin is a second level.

In an example, if the status of the first pin is a first level, the first processor may determine that a status of the second pin is a third level, and further determine that the second processor is accessing the memory; or if the status of the first pin is a second level, the first processor may determine that a status of the second pin is a fourth level, and further determine that the second processor is not accessing the memory.

In an example, the first level is, for example, a high level, and the second level is, for example, a low level; or the first level is, for example, a low level, and the second level is, for example, a high level.

In an example, the third level is, for example, a high level, and the fourth level is, for example, a low level; or the fourth level is, for example, a low level, and the third level is, for example, a high level.

In some examples, in S1104, the first processor determines that the status of the first pin is the second level, and further determines that the second processor is not accessing the memory. In this case, the first processor may normally access the memory. To help another processor (for example, the second processor) know, in a process in which the first processor accesses the memory, that the first processor is accessing the memory, the first processor may notify, by setting a status of a pin, the another processor (for example, the second processor) of a status of accessing the memory by the first processor. For example, when the first processor determines that the status of the first pin is the second level in S1104, the first processor performs S1105 to S1108.

S1105: The first processor sets a status of a third pin to a fifth level.

In some embodiments, the storage driver of the first processor includes the third pin, and the status of the third pin indicates an access status of the first processor with respect to the memory, for example, indicates whether the first processor is accessing the memory. Based on this, before accessing the memory, the first processor may set the status of the third pin to a status indicating that the first processor is accessing the memory.

In an example, that the status of the third pin is a sixth level indicates that the first processor is not accessing the memory, and that the status of the third pin is the fifth level indicates that the first processor is accessing the memory. Based on this, after it is determined that the second processor is not accessing the memory and before the first processor accesses the memory, the first processor may adjust the status of the third pin from the sixth level to the fifth level, to help the another processor know that the first processor is accessing the memory, thereby preventing a conflict caused by simultaneous access to the memory by a plurality of processors, and implementing more scientific and orderly memory sharing.

S1106: The first processor determines whether the status of the first pin is the second level.

In some embodiments, to avoid a conflict that is caused by simultaneous access to the memory by the first processor and the second processor and that is caused when the second processor starts to access the memory after the first processor determines, based on S1104, that the status of the first pin is the second level and further determines that the second processor is not accessing the memory, the first processor may determine again whether the status of the first pin is the second level, to confirm again that the second processor is not accessing the memory.

S1107: The first processor accesses the memory.

A specific operation in which the first processor accesses the memory in response to the service request is related to a purpose of accessing the memory by an application by using the service request. For example, it is assumed that the purpose of accessing the memory by the application by using the service request is to read first data in the memory. In this case, the first processor reads, from the memory in response to the service request, the first data that the application needs to read. For another example, it is assumed that the purpose of accessing the memory by the application by using the service request is to write second data into the memory. In this case, the first processor writes, into the memory in response to the service request, the second data that the application needs to write. For another example, it is assumed that the purpose of accessing the memory by the application by using the service request is to modify third data in the memory. In this case, the first processor modifies the third data in the memory in response to the service request.

S1108: The first processor sets the status of the third pin to the sixth level.

That the status of the third pin is the sixth level indicates that the first processor is not accessing the memory. Based on this, another processor may know that the first processor is not accessing the memory, so that the another processor can access the memory in time when the another processor needs to access the memory, thereby implementing more scientific and orderly memory sharing.

It should be noted that the foregoing embodiment uses only an example in which the first processor determines, based on S1104, that the status of the first pin is the second level, and further determines that the second processor is not accessing the memory. In some other examples, as shown in FIG. 11A and FIG. 11B, if the first processor determines, based on S1104, that the status of the first pin is not the second level, for example, is the first level, the first processor may perform subsequent processing in any one of the following three manners (Manner 1 to Manner 3):

Manner 1: S1104 is performed again, and S1105 to S1108 are performed when the status of the first pin is the second level.

For example, the first processor may cyclically perform S1104 according to a specific cycle T (for example, every 100 milliseconds), and perform S1105 to S1108 after determining that the status of the first pin is the second level.

Based on this, the first processor may temporarily not access the memory, and access the memory when it is ensured by performing S1104 again that another processor like the second processor is not accessing the memory, to prevent a conflict caused by simultaneous access to the memory by a plurality of processors, and implement more scientific and orderly memory sharing.

Manner 2: S1104 to S1108 are performed again after S1109 and S1110 are performed.

S1109 and S1110 are specifically as follows:
S1109: The first processor starts an interrupt monitoring function.

After the interrupt monitoring function is started, the second processor actively notifies the first processor after the second processor ends access to the memory. For example, after ending the access to the memory, the second processor may notify, by adjusting the status of the second pin to the fourth level, the first processor that the second processor has ended the access to the memory. Alternatively, after ending the access to the memory, the second processor may notify, in a manner of sending a reminder or the like, the first processor that the second processor has ended the access to the memory. A specific manner is not limited in this embodiment of this application.

S1110: The interrupt monitoring function indicates that the status of the first pin is the second level.

Based on this, the first processor may temporarily not access the memory, and access the memory when it is ensured in a manner of starting the interrupt monitoring function that another processor like the second processor is not accessing the memory. In this way, when the memory is accessed in response to the service request in a timely manner, a conflict caused by simultaneous access to the memory by a plurality of processors is prevented, and more scientific and orderly memory sharing is implemented.

In addition, compared with Manner 1, Manner 2 can avoid a waste of power consumption, processing resources, and the like caused to the terminal device if the first processor continuously obtains an access status of the second processor with respect to the memory.

Manner 3: S1104 to S1108 are performed again after S1111 and S1112 are performed.

S1111 and S1112 are specifically as follows:
S1111: The first processor starts a waiting period.

For example, the waiting period corresponds to preset duration, for example, 5 milliseconds.

S1112: Wait until the preset duration has elapsed.

Based on this, the first processor may temporarily not access the memory, and access the memory after waiting until the preset duration has elapsed and determining again that no other processor, such as the second processor, is accessing the memory. This prevents a conflict caused by simultaneous access to the memory by a plurality of processors, and enables more scientific and orderly memory sharing.

In addition, compared with Manner 1, Manner 3 can avoid a waste of power consumption, processing resources, and the like caused to the terminal device if the first processor continuously obtains an access status of the second processor with respect to the memory.

In addition, it should be noted that the foregoing embodiment uses only an example in which the first processor determines, based on S1106, that the status of the first pin is the second level, and further determines that the second processor is not accessing the memory. In some other examples, as shown in FIG. 11A and FIG. 11B, if the first processor determines, based on S1106, that the status of the first pin is not the second level, for example, is the first level, the first processor may also perform subsequent processing in any one of Manner 1 to Manner 3. Details are not described herein again.

It may be understood that, based on the memory access method provided in this application, in the memory access methods shown in FIG. 9 and FIG. 10, a plurality of processors (for example, the first processor and the second processor) of the terminal device share a same memory, so that it can be ensured that in any application scenario, any processor can normally perform data storage, modification or reading of stored data, and the like. For example, compared with the architecture in which the MCU stores the MCU-related data by using the memory configured for the AP, an architecture provided in this solution has advantages: Even if the AP and the memory configured for the AP are powered off in the low power mode, storage of the MCU-related data, normal reading, modification, and deletion of the stored data, and the like can still be normally performed. In addition, any processor (for example, the first processor) in the plurality of processors may implement mutually exclusive access to the memory based on an obtained access status of another processor with respect to the memory, for example, whether the another processor is accessing the memory, thereby implementing more scientific and orderly memory sharing.

In addition, the solution in which the plurality of processors (for example, the first processor and the second processor) of the terminal device provided in this application share the same memory can further reduce production costs of the terminal device, and support miniaturization of the terminal device.

In addition, because the plurality of processors (for example, the first processor and the second processor) of the terminal device share the same memory, after a processor writes data (for example, data of music A) into the memory, another processor may know that the data has been written into the memory. Therefore, when the another processor receives a service request for writing the same data into the memory, the processor may not repeatedly write the same data, but normally feed back a message indicating that the data is successfully written into the application. This can avoid a problem that data of some applications related to a plurality of processors (for example, the AP and the MCU) is repeatedly written.

A specific processor manner used when the first processor determines, based on S1104, that the status of the first pin is not the second level is not limited in this embodiment of this application. The first processor may perform subsequent processing in any one of Manner 1 to Manner 3. In addition, a specific processor manner used when the first processor determines, based on S1106, that the status of the first pin is not the second level is not limited in this embodiment of this application. The first processor may perform subsequent processing in any one of Manner 1 to Manner 3, depending on a specific device capability, a power consumption requirement, a service requirement, an application scenario, and the like.

In addition, it should be noted that the foregoing embodiment uses only an example in which the first processor performs S1106 after performing S1105, then performs S1107 and S1108 based on an execution result of S1106, or performs S1107 and S1108 after performing S1109 and S1110 based on an execution result of S1106, or performs S1107 and S1108 after performing S1111 and S1112 based on an execution result of S1106. Whether the first processor performs S1106 after performing S1105 is not limited in this application. In other words, S1106 is not a mandatory step. For example, in some embodiments, after S1105 is performed, the first processor may directly perform S1107 and S1108.

It should be understood that the solutions in embodiments of this application may be properly combined for use, and explanations or descriptions of terms in embodiments may be cross-referenced or explained in embodiments. This is not limited.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be understood that, to implement functions of any one of the foregoing embodiments, the terminal device or the like includes a corresponding hardware structure and/or software module for executing each function. A person skilled in the art should easily be aware that, in combination with units and algorithm steps of the examples described in embodiments disclosed in this specification, this application may be implemented by hardware or a combination of hardware and computer software. Whether a function is performed in a manner of hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal device may be divided into functional modules. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. It should be further understood that the modules in the terminal device or the like may be implemented in a form of software and/or hardware. This is not specifically limited. In other words, the terminal device or the like is presented in a form of a functional module. The "module" herein may be an application-specific integrated circuit ASIC, a circuit, a processor that executes one or more software or firmware programs and a memory, an integrated logic circuit, and/or another device that can provide the foregoing functions.

In an optional manner, when software is used for implementing data transmission, the data transmission may be completely or partially implemented in a form of a computer program product. The computer program product includes one or more computer instructions. When the computer program instructions are loaded and executed on a computer, the procedures or functions according to embodiments of this application are completely or partially implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or a wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid-state drive, SSD)), or the like.

Method or algorithm steps described in combination with embodiments of this application may be implemented by hardware, or may be implemented by a processor by executing software instructions. The software instructions may include a corresponding software module. The software module may be stored in a random access memory (random access memory, RAM), a flash memory, a read-only memory (read-only memory, ROM), an erasable programmable read-only memory (erasable programmable read-only memory, EPROM), an electrically erasable programmable read-only memory (electrically erasable programmable read-only memory, EEPROM), a register, a hard disk drive, a removable hard disk, a compact disc read-only memory (compact disc read-only memory, CD-ROM), or any other form of storage medium well known in the art. For example, the storage medium is coupled to the processor, so that the processor can read information from the storage medium and write information into the storage medium. Certainly, the storage medium may be a component of the processor. The processor and the storage medium may be located in an application-specific integrated circuit (application-specific integrated circuit, ASIC). In addition, the ASIC may be located in a terminal device. Certainly, the processor and the storage medium may alternatively exist as discrete components.

Based on the foregoing descriptions of the implementations, a person skilled in the art may clearly understand that for the purpose of convenient and brief descriptions, division into the foregoing functional modules is merely used as an example for description. During actual application, the foregoing functions can be allocated to different functional modules for implementation based on a requirement, that is, an inner structure of an apparatus is divided into different functional modules to implement all or some of the functions described above.

## Claims

1. A memory access method, wherein the method is applied to a first processor in a terminal device, the terminal device further comprises a second processor and a memory, the first processor and the second processor share the memory, and the method comprises:
receiving a service request of an application, wherein the service request is used to request access to the memory;
obtaining first information from the second processor, wherein the first information indicates whether the second processor is accessing the memory; and
when the first information indicates that the second processor is not accessing the memory, accessing the memory in response to the service request.

2. The method according to claim 1, wherein the first processor comprises a first pin, the first pin is connected to a second pin of the second processor, and obtaining the first information from the second processor comprises:
obtaining a status of the first pin, wherein the status of the first pin indicates whether the second processor is accessing the memory.

3. The method according to claim 2, wherein the status of the first pin comprises a first level and a second level, and the method further comprises:
if the status of the first pin is the first level, determining that the second processor is accessing the memory; or
if the status of the first pin is the second level, determining that the second processor is not accessing the memory.

4. The method according to claim 3, wherein
when a status of the second pin is a third level, the status of the first pin is the first level; or
when a status of the second pin is a fourth level, the status of the first pin is the second level.

5. The method according to any one of claims 1 to 4, wherein the first processor further comprises a third pin, and a status of the third pin indicates whether the first processor is accessing the memory.

6. The method according to claim 5, wherein
when the first processor is accessing the memory, the status of the third pin is a fifth level; or when the first processor is not accessing the memory, the status of the third pin is a sixth level.

7. The method according to claim 6, wherein the method further comprises:
before the first processor accesses the memory, adjusting the status of the third pin from the sixth level to the fifth level.

8. The method according to claim 7, wherein adjusting the status of the third pin from the sixth level to the fifth level comprises:
after the service request is received, obtaining second information from the second processor, wherein the second information indicates whether the second processor is accessing the memory; and
when the second information indicates that the second processor is not accessing the memory, adjusting the status of the third pin from the sixth level to the fifth level.

9. The method according to claim 8, wherein obtaining the first information from the second processor comprises:
when the second information indicates that the second processor is accessing the memory, obtaining the first information from the second processor after waiting for preset duration.

10. The method according to any one of claims 1 to 9, wherein the service request is used to request access to one or more of the following partitions in the memory: a partition corresponding to the first processor and not corresponding to the second processor, and a partition corresponding to both the first processor and the second processor.

11. The method according to claim 10, wherein the memory further comprises a partition corresponding to the second processor and not corresponding to the first processor.

12. The method according to any one of claims 1 to 11, wherein
the first processor accesses the memory to perform one or more of the following: reading data in the memory, writing data into the memory, and modifying the data in the memory.

13. The method according to any one of claims 1 to 12, wherein
the first processor is an application processor AP, and the second processor is a microprogrammed control unit MCU; or the first processor is an MCU, and the second processor is an AP, wherein
the memory is an embedded multimedia card eMMC.

14. A chip, wherein the chip comprises a processing module and one or more pins, and the processing module and the one or more pins are configured to support the chip in implementing the method according to any one of claims 1 to 13.

15. A terminal device, wherein the terminal device comprises a first processor, a second processor, and a memory, the first processor and the second processor share the memory, and the first processor or the second processor is configured to implement the method according to any one of claims 1 to 13.

16. A computer-readable storage medium, wherein the computer-readable storage medium stores computer program instructions, and when the computer program instructions are executed by a processing circuit, the method according to any one of claims 1 to 13 is implemented.

17. A computer program product comprising instructions, wherein when the computer program product runs on a computer, the computer is enabled to perform the method according to any one of claims 1 to 13.
